# EUROPEAN PATENT APPLICATION

(11) **EP 4 456 385 A1**
(43) Date of publication of application: **30.10.2024**
(21) Application number: 23169426.6
(22) Date of filing: 24.04.2023
(51) Int. Cl.: H02K 7/08, F04D 29/057

(54) **HIGH SPEED ELECTRICAL MACHINE**

(71) Applicant: Celeroton AG, 8604 Volketswil (CH)
(72) Inventor: LOOSER, Andreas, 8604 Volketswil (CH); BLASER, Manuel, 8604 Volketswil (CH); BOSSHARD, Daniel, 8604 Volketswil (CH)
(74) Representative: Frei Patent Attorneys

(57) **Abstract**

An electrical machine comprises a stator (1) with a stator body (25) supporting an electrical stator (3) and a rotor (5), the rotor (5) being supported by means of a bearing comprising a **radial bearing section** (17) forming a radial **gas** bearing and an **axial bearing section** (12) forming an axial **gas** bearing, the stator side parts of these bearing sections comprising an **axial bearing assembly** (11) and a **bushing** (18). The bushing (18) is aligned relative to the stator body (25) by the bushing (18) being aligned relative to a **reference body (143)** and by the reference body (143) being aligned relative to the stator body (25). The rotor (5) is **removable from the stator body (25) while leaving the reference body (143) in place.**

## Description

The invention relates to the field of electrical machines, in particular to high-speed electrical machines with gas bearings.

An electric motor generally comprises a rotor and a stator, the stator comprising a stator body supporting and housing an electrical stator and bearings. The position of the bearings relative to the stator body can be defined by bearing flanges of the stator body. Often, two journal bearings are present, typically located at opposite sides of the stator. The precision of the alignment of the bearings in this case is mainly defined by the precision with which the bearing flange and stator body are machined. With fluid film and in particular for gas bearings, precise alignment is crucial and this arrangement in general requires special measures such as self-aligning or compliant bushing mountings, or machining, e.g. reaming, of the pair of bearings after assembly. Alternatively, the journal bearings can be arranged on the same side of the stator. This arrangement is often called overhanging motor design. With the overhanging design, the two journal bearings can be integrated into a single part, thus precise bearing alignment is easier to achieve. However, this approach generally results in longer rotors and therefore more critical dynamic behaviour of the rotor. Furthermore, windage losses, caused by air resistance, are increased, with a negative impact on the overall motor efficiency.

WO 20171202941 A1 and WO 2020/002509 A1 show bearing structures for high-speed electrical machines of the overhanging type.

JPH066739U shows a journal bearing in which a radial journal bearing comprises two tubular bushing cylinders, each elastically suspended by O-rings. One of the bushing cylinders comprises a bearing plate for an axial bearing at one of its ends. An axial force pushing against the axial bearing plate compresses an elastic ring at the opposite end of the bushing cylinder.

One of the issues with prior art machines is that disassembly and re-assembly is complicated.

There is a need for an **electrical machine** that is suited for high-speed applications and that simplifies disassembly and re-assembly.

It is therefore an object of the invention to create a high-speed electrical machine of the type mentioned initially, which overcomes the disadvantages mentioned above.

This object is achieved by a high-speed electrical machine according to a **first aspect** of the invention.

It is another object of the invention to create a bushing structure for such a high-speed electrical machine, which allows for a rigid, high precision alignment of a bushing with a reference body.

This object is achieved by a bushing structure for a high-speed electrical machine according to a **second aspect** of the invention.

According to the **first aspect,** an electrical machine with the following features is provided.

The electrical machine comprises a stator with a stator body supporting an electrical stator and a rotor, the rotor being supported by means of a bearing comprising a **radial bearing section** forming a radial **gas** bearing and an **axial bearing section** forming an axial **gas** bearing, the stator side parts of these bearing sections comprising an **axial bearing assembly** and a **bushing.** The bushing is aligned relative to the stator body by the bushing being aligned relative to a **reference body** and by the reference body being aligned relative to the stator body. The reference body is aligned relative to the stator body by a **first reference surface** of the reference body being pressed against a **stator body reference surface** of the stator body. The rotor is **removable from the stator body while leaving the reference body in place.**

In other words, the reference body can be left attached to the stator body when the rotor is removed. Removing the rotor can necessitate disassembling or removing the axial bearing assembly. Therefore, in other words, in some embodiments it is the case that when the axial bearing assembly is disassembled, the reference body remains attached to the stator body. In some embodiments it is the case that when the axial bearing assembly is removed, the reference body remains attached to the stator body. Again in other words, the bushing is held in place in the stator body independent from at least an outer stator disc of the axial bearing assembly.

A further advantage is that the forces required to attach the reference body to the stator body are generally higher than those for compressing the axial bearing assembly. By having separate fasteners, the requirements for attaching and compressing the axial bearing assembly are lowered and can be implemented using less space.

In embodiments, the bushing is aligned relative to the reference body by an **alignment surface** of the bushing being pressed against **a second reference surface** of the reference body.

In embodiments, the alignment surface is pressed against the second reference surface by a force exerted by an **axial compensation element** that is compressed between the bushing structure and the stator body.

In embodiments, the bushing comprises a **bushing flange,** and wherein the alignment surface lies at a **front side** of the bushing flange, and the axial compensation element is compressed between a **back side** of the bushing flange and the stator body. As a result, the elements that constitute a rigid attachment of the bushing to the stator body, that is, the first reference surface, the second reference surface, the alignment surface and the axial compensation element lie at the same end of the bushing. This is the end at which the axial bearing is located. At the opposite end, the bushing is not rigidly attached and can move to a certain degree, so that the bushing is not deformed due to imprecisions in the stator body.

In embodiments, the first reference surface and the stator body reference surface are flat surfaces that are normal to an axis of rotation of the machine.

In embodiments, the alignment surface and the second reference surface are flat surfaces that are normal to an axis of rotation of the machine.

In embodiments, the first axial reference surface and the second reference surface are coplanar.

The reference body can be flat, bounded by two opposite parallel surfaces. In this case, it can be called a reference plate. This simplifies manufacturing of the reference body.

In embodiments, the bushing is aligned relative to the reference body by being rigidly attached to the reference body, the bushing and reference body together forming a **bushing structure.** This allows to remove and handle the bushing structure as a whole, without affecting the alignment between the bushing and the reference body.

In embodiments, the reference body and an inner stator disc are the same part. This simplifies the construction of the machine. The axial bearing assembly thus comprises the reference body which serves as the inner stator disc, and an outer stator disc.

In embodiments, the reference body and an inner stator disc are separate parts.

The axial bearing assembly comprising the inner stator disc and an outer stator disc can be clamped against and aligned with the reference body.

The axial bearing assembly, both in the case in which the inner stator disc and the reference body are the same part or separate, can be held together or compressed by other means, independent of the attachment of the reference body to the stator body. This makes it possible to disassemble the axial bearing assembly without affecting the attachment of the reference body to the stator body. The axial bearing assembly can be removed while leaving the bushing in place, and thus without affecting the alignment of the bushing in the stator body.

In embodiments, the axial bearing assembly is held together by an **impeller housing.** This simplifies the construction of the axial bearing assembly since no additional fastening elements are required for attaching the axial bearing assembly to the stator body.

In embodiments, the reference body is pressed against the stator body by **screws.**

In particular, along a section of the screws and/or a section of threaded holes in the stator body in which the screws are arranged, these sections being adjacent to the stator body reference surface, **no threads** are present.

This prevents microscopic deformations of the stator body in the region of the boreholes by tension on the threads. Furthermore, the section of the screw that is free from the thread is longer, giving the screw a longer section that can elastically expand when the screw is tightened. The sections without screws typically have a length of about the nominal diameter of the thread. The diameter of the holes in the stator body in such a section is ca. 1.2 times the nominal diameter of the thread.

In embodiments, deformation of the reference body is prevented by **chamfering,** on the side facing the stator body, through holes in the reference body in which the screws are arranged.

In embodiments, screw heads of the screws are sunk in the reference body, and gasket rings, in particular O-rings, are arranged around the screw heads, sealing off the threads. This prevents shavings and dirt from the region of the threads from contaminating the axial bearing.

In embodiments, the reference body is pressed against the stator body by one or more **fasteners** arranged in one or more **radial slots** arranged at the circumference of reference body. In particular the fastener is a retaining ring, more in particular it is a wedge shaped retaining ring. This implements a space saving attachment of the reference body and the bushing structure in the stator body, especially requiring less length along the longitudinal axis, when compared to screws.

According to the **second aspect,** related to a rigid attachment between the bushing and reference body, a bushing structure with the following features is provided. The second aspect can be implemented in combination with the first aspect, or entirely independent.

In embodiments according to the second aspect, the bushing is rigidly attached to the reference body, by the bushing comprising a **bushing flange** and the bushing flange is held against the reference body by **bushing screws** screwed into the reference body.

In embodiments, at least one or more of the following is the case
- the bushing screws are arranged in axial channels or grooves in the bushing flange or in a **connection ring** arranged around the bushing flange and holding the bushing flange,
- with play in radial directions between the bushing and the reference body, preferably wherein the play is at least 0.1 mm or at least 0.2 mm or at least 0.4 mm.

This allows to attach a relatively thick reference body, optionally serving as inner stator disc, to the bushing. Such a thick reference body can be required because of the forces used to press it against the stator body. The alignment is established by the second reference surface of the reference body being pressed against the alignment surface of the bushing. Resilient elements in this connection, and/or the play allow to compensate for differences in thermal expansion. The connection ring distributes the forces exerted by the bushing screws around the bushing flange. This is advantageous if the bushing and its flange are made of a ceramic material. The connection ring is typically made of a metal.

In embodiments, between the bushing flange and the bushing screws one or more **bushing springs** are arranged and are compressed by the bushing screws.

These one or more bushing springs allow to compensate for differences in thermal expansion of the bushing flange and the bushing screws. Otherwise, repeated temperature changes could lead to a loosening of the bushing screws.

In embodiments, the **bushing is** rigidly attached to the reference body, by the bushing comprising a bushing flange and the reference body comprising at least one **attachment element** with **holding sections** of the at least one attachment element being bent to hold the bushing at the bushing flange,

In embodiments, at least one or more of the following is the case:
- the at least one attachment element is formed as part of the reference body or is rigidly attached to the reference body,
- the at least one attachment element is a cylindrical sleeve with the holding sections being axially extending fingers.

The axial direction corresponds to the axis of rotation of the rotor and shall also be called longitudinal direction.

In embodiments, the axial bearing assembly is rigidly mounted to the stator body. Optionally, the bushing is rigidly connected to the axial bearing assembly.

In embodiments, the bushing is rigidly mounted to the stator body near one end of the bushing. Optionally, the bushing is elastically supported by the stator body near the opposite end of the bushing.

As a result, the bushing is rigidly attached, at one end, e.g. by the axial bearing part, and the remainder of the bushing is elastically suspended - which eliminates or reduces mechanical stress - but can be thermally coupled to the cooling body.

The journal bearings can be integrated into a single part, thus precise alignment can be easier to achieve than with journal bearings on separate parts.

In embodiments, the radial bearing section of the bushing extends in the longitudinal direction of the axis of rotation and all bearing elements and cooperating rotor bearing surfaces of the radial bearing section lie outside the magnetic gap between the electrical stator and the rotor.

This means, in other words, that the machine is of the overhanging type, that is, the journal bearing, or the bushing and the cooling body, respectively, are located at different locations than the electrical stator and permanent magnet, when seen along the longitudinal axis of the machine.

Here and throughout this document, the terms "rigidly" and "fixed" are used as opposed to "elastically". An elastic connection has a spring rate or a Young's modulus that is at least, for example, 100 or 10'000 or 1'000'000 times larger than in a rigid connection.

A rigid connection is a connection designed such that the connected parts do not move relative to one another during normal operation of the machine. Thus, a rigid connection can be established by screwing parts together or by pressing them against one another with a spring. In this case, the spring is not part of the rigid connection but provides a force that maintains rigidity of the connection.

An elastic support can be an O-ring, typically of a (synthetic) rubber, or a metallic spring.

The term "high speed electrical machine" is taken to cover machines that are suited for more than 100'000 revolutions per minute.

The gas of the gas bearing can be any gas the machine operates in, such as air, a cooling agent, natural gas etc. The gas bearing can be a passive or an active gas bearing.

The bushing can be made of a ceramic material or another material that provides sufficient mechanical stiffness and does not affect the magnetic field in the magnetic air gap. The advantage of ceramic materials is that they are suited both for gas bearings and can be placed in the magnetic air gap, where they are penetrated by the torque generating magnetic field. Generally, electrical insulators or materials with low electrical conductivity such as ceramics, glass ceramics or technical glasses, plastics, composites, mineral materials etc. can be used to avoid excessive eddy current losses caused by the alternating magnetic air gap field.

In embodiments, the electrical machine is of the slotless type. In other words, the electrical stator comprises an air gap winding rather than slotted windings. In other embodiments, the electrical machine is of the slotted type.

Typically, the stator body houses the electrical stator. "Materially bonded", also called "substance-to-substance bonded" typically is done by a shrink fit or by potting, welding or soldering.

In embodiments, the stator flange forms at least part of a wall of a coolant channel. This allows for the coolant to efficiently cool both the stator body and the cooling body.

The terms "axially adjacent" and "radially adjacent" are understood to mean "adjacent when seen in the direction of the axis of rotation" and "adjacent when seen in a radial direction", respectively.

Further embodiments are evident from the dependent patent claims.

The subject matter of the invention will be explained in more detail in the following text with reference to exemplary embodiments which are illustrated in the attached drawings, which schematically show:
- Figure 1: a longitudinal section of bearing sections of a machine for a turbocompressor;
- Figure 2: a subset of the elements of Figure 1, for aligning a bushing with a stator body;
- Figure 3: the elements of Figure 2 in an exploded section;
- Figure 4-5: a retaining ring holding a combined inner stator disc and reference body;
- Figure 6-9: details of attachments of the reference body by means of screws;
- Figure 10: a bushing structure;
- Figure 11 - 16: details of different attachments of a bushing to a reference body.

In principle, identical or functionally identical parts are provided with the same reference symbols in the figures.

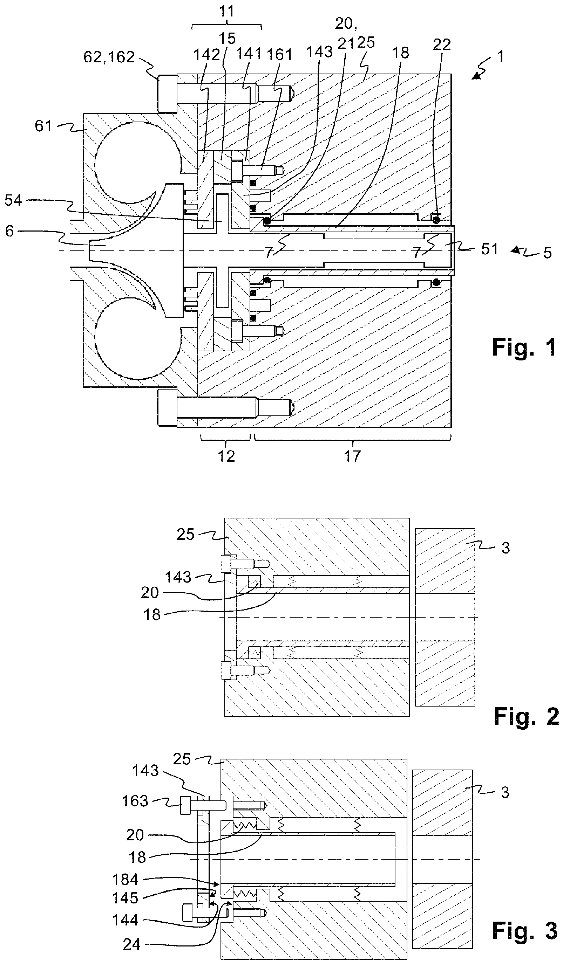

**Figure 1** shows a longitudinal section of bearing sections of a machine for a turbocompressor. The machine comprises a stator 1 and a rotor 5. The stator 1 comprises a stator body 25 in which the rotor 5 is rotatably arranged in a bearing comprising a radial bearing section 17 and an axial bearing section 12.

In the radial bearing section 17, journal bearings with a bearing air gap 7 between the rotor 5 and a bushing 18 are present. The bushing 18 is rigidly attached at one end, proximal to the axial bearing assembly 11. This proximal attachment also comprises a axial compensation element 20 which can serve as first radial elastic support 21. The proximal attachment defines the alignment of the bushing 18 relative to the stator body 25. At the opposite, distal end, the bushing 18 is elastically supported in the stator body 25 by means of a second radial elastic support 22. By having a rigid attachment to the stator body 25 at only one side, the bushing 18 is not affected by deformations of the stator body 25, especially due to temperature changes.

In the axial bearing assembly 11, a rotor disc 54 of the rotor is arranged to rotate between an inner stator disc 141 and an outer stator disc 142, separated by a spacer element 15. The inner stator disc 141 serves as a reference body 143 for aligning the bushing 18 with the stator body 25, as is explained in the context of **Figures 2** and **3****.** The inner stator disc 141 is attached to the stator body 25 by means of inner fasteners 161 which in this embodiment are in the form of screws. The axial bearing assembly 11 is attached to the stator body 25 by means of outer fasteners 162. In this embodiment these are impeller housing fasteners 62 holding the impeller housing 61 against the stator body 25 and thereby pressing he axial bearing assembly 11 against the stator body 25. In other embodiments, the outer fasteners 162 press the outer stator disc 142 and the intervening spacer element 15 and optionally the inner stator disc 141 against the stator body 25.

Since the inner stator disc 141, or more generally, a reference body 143, for alignment of the bushing 18, is attached to and aligned with the stator body 25, the rotor 5 can be removed by removing the outer stator disc 142 and re-assembled without disturbing the alignment of the bushing 18 relative to the stator body 25.

The rotor 5 has a shaft 51 driving an impeller 6 arranged in the impeller housing 61. An electrical motor section, to the right of the elements shown, with an electrical stator comprising a motor coil and core, and, in the rotor, a permanent magnet, is omitted for clarity. The bearing structure shown can of course also be implemented in another context, without the turbocompressor elements such as the impeller 6 and impeller housing 61.

**Figure 2** shows a subset of the elements of Figure 1, with a reference body 143 for aligning the bushing with the stator body 25. The electrical stator 3 is shown only schematically. **Figure 3** shows the elements of Figure 2 in an exploded section. The reference body 143 can serve as the inner stator disc 141, or it can be (not illustrated) an element separate from the inner stator disc 141. The reference body 143 comprises a first reference surface 144 that is pressed against a stator body reference surface 24 of the stator body 25. This defines the alignment between the reference body 143 and the stator body 25. The reference body 143 a second reference surface 145 that is pressed against an alignment surface 184 of the bushing 18. This defines the alignment between the reference body 143 and the bushing 18. The pressure at both alignments is effected by one or more fasteners, in this embodiment, screws 163, pressing the reference body 143 against the stator body 25 in the axial direction, and by one or more axial compensation elements 20 compressed between the bushing 18 and stator body 25 and thereby effecting a counterforce in the opposite direction, pressing the bushing 18 against the reference body 143.

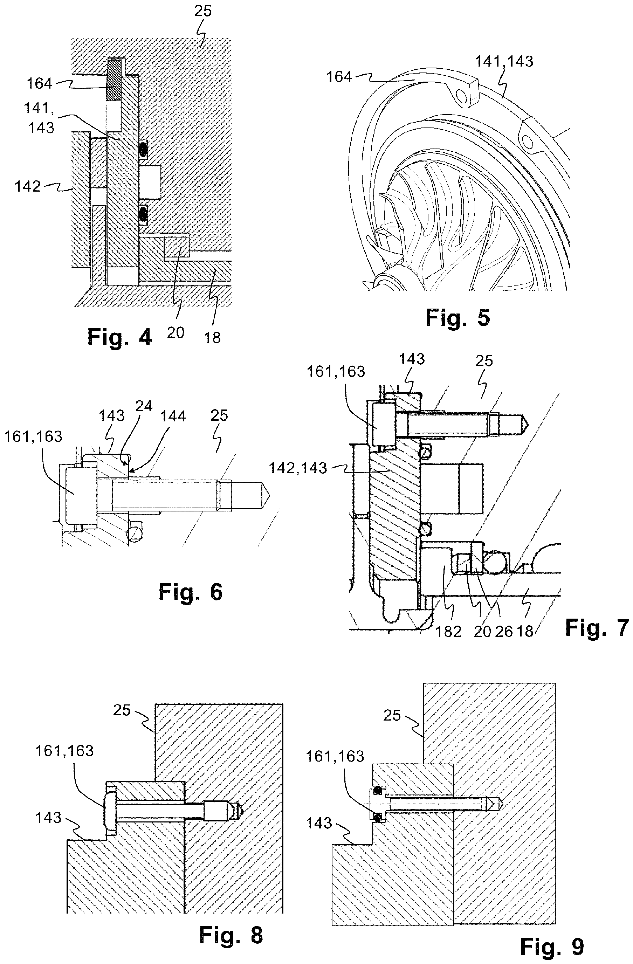

**Figure 4 - 5** shows, instead of the screws 163, a fastener in the form of a retaining ring 164 holding the reference body 143 (which in this embodiment also serves as the inner stator disc 141) against the stator body 25. The retaining ring 164 uses less room in the axial direction and thereby allows to shorten the overall length of the machine. The retaining ring 164 can be wedge shaped, thereby effecting a fixation that to a certain degree is compliant in the axial direction.

**Figure 6-9** shows details of attachments of the reference body by means of screws. Their common feature is that they serve to avoid deformation of the high precision stator body reference surface 24 due to forces exerted on the threads in the stator body 25. This is done by either providing an initial section of the borehole into which the screw 163 is screwed with a larger bore without threads, as shown in **Figure 6** and **Figure 7****.** Alternatively, this is done by the screw 163 having a shank with a smaller diameter that the thread, as in **Figure 8****.** In both cases, the threads engage only in a section distant from the stator body reference surface 24. The section without threads typically has a length of at least 50% or 80% or 100% of the nominal diameter of the thread.

**Figure 7** also shows the axial compensation element 20 with a washer 26 compressed between a bushing flange 182 of the bushing 18 and a radially inwardly projection part of the stator body 25.

The screw of **Figure 8** thanks to the elongated shaft without threads has a longer section that is elastically tensioned as the screw 163 is tightened. This improves the range of temperature changes that the connection can absorb without the screw loosening.

The embodiments without threads along a section of the borehole and/or screw also provide a volume in which debris from wear of the thread or threadlocker can collect rather than contaminating the axial bearing. **Figure 9** shows a screw 163 with an O-Ring around its head and between the head and the reference body 143. This prevents such contaminants from travelling from leaving the borehole.

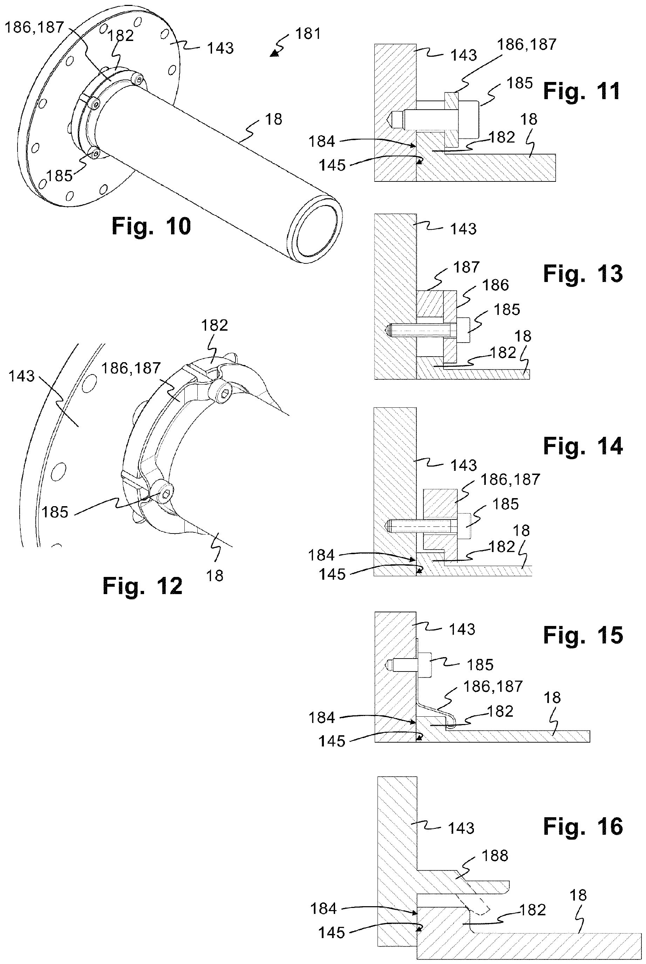

**Figure 10** shows a bushing structure 181 comprising a reference body 143 attached to a bushing 18. They are aligned by the respective second reference surface 145 and alignment surface 184 being pressed against one another, by bushing screws 185. **Figure 11** shows a detail of a sectional view of **Figure 10****,** with a bushing screw 185. The bushing screw 185 can be arranged in a radial slot in the bushing flange 182, simplifying its manufacturing. The bushing screws 185 hold the bushing 18 by a bushing flange 182 against the reference body 143. A connection ring 187, typically made of a metal material, is pressed by the bushing screws 185 against the bushing flange 182, typically made of a ceramic material, in one piece with the remainder of the bushing 18. The connection ring 187 distributes the force of the bushing screws 185 over the potentially brittle surface of the bushing flange 182. The connection ring 187 can introduce some resilience in the stack of elements compressed by the bushing screw 185, thereby preventing the bushing screws 185 from loosening. For example, the connection ring 187 can be a plate spring or disk spring. In this case, the connection ring 187 shall be called bushing spring 186. **Figure 12** shows the same basic structure as **Figures 10** and **11****,** but with the connection ring 187 more clearly shown to be acting as bushing spring 186. In all of **Figures 10** to **12** the connection ring 187 or bushing spring 186 can be shaped to have resilient sections that are compressed and bent by the bushing screws 185 when the bushing screws 185 are tightened. **Figures 10** and **11** show the bushing spring 186 being entirely compressed an thus in a flat state.

**Figure 13** shows a separate connection ring 187 and bushing spring 186. The bushing flange 182 is, in the radial direction, shorter as in the preceding figures, and the bushing screws 185 press the bushing spring 186, near its inner periphery, against the bushing flange 182 and, near its outer periphery, against the connection ring 187. The shorter bushing makes it easier to manufacture.

**Figure 14** shows the connection ring 187 again having the function of a bushing spring 186. An inwardly protruding rim around the inner periphery of the connection ring 187 engages the bushing flange 182. The connection ring 187 can act as a plate spring as it is screwed against the reference body 143.

**Figure 15** shows a structurally similar arrangement as Figure 14, but with different proportions of the connection ring 187 or bushing spring 186, being in the form of a piece of bent sheet metal.

**Figure 16** shows an attachment element 188 with an axially extending finger that is bent to hold the bushing flange 182 against the reference body 143. The attachment element 188 is shaped as part of the reference body 143. Alternatively (not shown) it can be attached to the reference body 143 by other means. Typically, it is in the form of a ring or ring-shaped wall supporting multiple fingers, or the fingers extend separately from the reference body 143, without being connected by a ring.

While the invention has been described in present embodiments, it is distinctly understood that the invention is not limited thereto, but may be otherwise variously embodied and practised within the scope of the claims.

## Claims

1. An electrical machine comprising a stator (1) with a stator body (25) supporting an electrical stator (3) and a rotor (5), the rotor (5) being supported by means of a bearing comprising a **radial bearing section** (17) forming a radial **gas** bearing and an **axial bearing section** (12) forming an axial **gas** bearing, the stator side parts of these bearing sections comprising an **axial bearing assembly** (11) and a **bushing** (18),
wherein the bushing (18) is aligned relative to the stator body (25) by the bushing (18) being aligned relative to a **reference body (143)** and by the reference body (143) being aligned relative to the stator body (25),
wherein the reference body (143) is aligned relative to the stator body (25) by a **first reference surface (144)** of the reference body (143) being pressed against a **stator body reference surface (24)** of the stator body (25),
wherein the rotor (5) is **removable from the stator body (25) while leaving the reference body (143) in place.**

2. The electrical machine of claim 1, wherein the bushing (18) is aligned relative to the reference body (143) by an **alignment surface (184)** of the bushing (18) being pressed against **a second reference surface (145)** of the reference body (143).

3. The electrical machine of claim 2, wherein the alignment surface (184) is pressed against the second reference surface (145) by a force exerted by an **axial compensation element** (20) that is compressed between the bushing structure (181) and the stator body (25).

4. The electrical machine of claim 3, wherein the bushing (18) comprises a **bushing flange** (182), and the alignment surface (184) lies at **a front side** of the bushing flange (182), and the axial compensation element (20) is compressed between a **back side** of the bushing flange (182) and the stator body (25).

5. The electrical machine of claim 1, wherein the bushing (18) is aligned relative to the reference body (143) by being rigidly attached to the reference body (143), the bushing (18) and reference body (143) together forming a **bushing structure** (181).

6. The electrical machine of one of the preceding claims, wherein the reference body (143) and an inner stator disc (141) are the same part.

7. The electrical machine of one of claims 1 to 5, wherein the reference body (143) and an inner stator disc (141) are separate parts.

8. The electrical machine of one of the preceding claims, wherein the axial bearing assembly (11) is held together by an **impeller housing (61).**

9. The electrical machine of one of the preceding claims, wherein the reference body (143) is pressed against the stator body (25) by **screws,** and
in particular wherein along a section of the screws and/or a section of threaded holes in the stator body (25) in which the screws are arranged, these sections being adjacent to the stator body reference surface (24), **no threads** are present.

10. The electrical machine of claims 1 to 8, wherein the reference body (143) is pressed against the stator body (25) by one or more **fasteners** arranged in one or more **radial slots** arranged at the circumference of reference body (143),
in particular by a retaining ring (164),
in particular by a wedge shaped retaining ring (164).

11. The electrical machine of claim 5, wherein the bushing (18) is rigidly attached to the reference body (143) by the bushing (18) comprising a **bushing flange** (182) and the bushing flange (182) being held against the reference body (143) by **bushing screws** (185) screwed into the reference body (143).

12. The electrical machine of claim 11, wherein at least one or more of the following is the case
• the bushing screws (185) are arranged in axial channels or grooves in the bushing flange (182) or in a **connection ring** arranged around the bushing flange (182) and holding the bushing flange (182),
• with play in radial directions between the bushing (18) and the reference body (143), preferably wherein the play is at least 0.1 mm or at least 0.2 mm or at least 0.4 mm.

13. The electrical machine of claim 11 or 12, wherein between the bushing flange (182) and the bushing screws (185) one or more **bushing springs** (186) are arranged and are compressed by the bushing screws (185).

14. The electrical machine of claim 5, wherein the **bushing (18) is** rigidly attached to the reference body (143) by the bushing (18) comprising a bushing flange (182) and the reference body (143) comprising at least one **attachment element** (188) with **holding sections** of the at least one attachment element (188) being **bent** to hold the bushing (18) at the bushing flange (182).

15. The electrical machine of claim 14, wherein at least one or more of the following is the case:
• the at least one attachment element (188) is formed as part of the reference body (143) or is rigidly attached to the reference body (143),
• the at least one attachment element (188) is a cylindrical sleeve with the holding sections being axially extending fingers.
